(19) Europäisches Patentamt
European Patent Office
Office européen des brevets

(11) EP 4 074 521 B1

(12) EUROPEAN PATENT SPECIFICATION

(45) Date of publication and mention
of the grant of the patent:
13.08.2025  Bulletin 2025/33

(21) Application number: 22161564.4

(22) Date of filing: 11.03.2022

(51) International Patent Classification (IPC):
B60C 9/20 (2006.01)     B60C 13/00 (2006.01)
B60C 9/18 (2006.01)     B60C 9/00 (2006.01)
B60C 15/04 (2006.01)

(52) Cooperative Patent Classification (CPC):
B60C 9/2003; B60C 2009/0092; B60C 2009/1828;
B60C 2009/2077; B60C 2009/2096;
B60C 2013/006; B60C 2015/042

(54) **PNEUMATIC TIRE**

LUFTREIFEN

PNEUMATIQUE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority:  13.04.2021  JP 2021067845

(43) Date of publication of application:
19.10.2022  Bulletin 2022/42

(73) Proprietor: Sumitomo Rubber Industries, Ltd.
Kobe-shi, Hyogo 651-0072 (JP)

(72) Inventors:
• INOUE, Manabu
Kobe-shi,, 651-0072 (JP)
• OKABE, Noboru
Kobe-shi,, 651-0072 (JP)

(74) Representative: TBK
Bavariaring 4-6
80336 München (DE)

(56) References cited:
WO-A1-2008/010531     ES-T3- 2 363 533
US-B2- 10 807 415

## Description

FIELD OF THE INVENTION

The present invention relates to a pneumatic tyre.

BACKGROUND OF THE INVENTION

Conventionally, as known from WO 2008/010531 A1, US 10 807 415 B2 and ES 2 363 533 T3, plies with a plurality of cords are used as a component of pneumatic tyres. In particular, WO 2008/010531 A1 discloses a pneumatic tyre as specified in the preamble of claim 1.

It is also known that the above cords affect various performances of pneumatic tyres. For example, JP 2017 140877 A has proposed a pneumatic tyre capable of reducing rolling resistance by setting the intermediate elongation of carcass cords.

SUMMARY OF THE INVENTION

When tyres travel, plies with cords having multiple filaments may undergo repeated compression deformation, causing the multiple filaments to break little by little, and then reducing the rigidity of plies. In particular, when driving at high speeds, tyres are often deformed, there has been a problem that the steering stability tends to decrease due to the decrease in rigidity of plies.

The present invention has been made in view of the above circumstances and has a major object to provide a pneumatic tyre capable of sustaining excellent steering stability at high speeds.

According to the present invention, the above object is achieved by a pneumatic tyre as specified in claim 1.

BRIEF DESCRIPTION OF THE DRAWINGS

FIG. 1 is a meridian cross-sectional view of a pneumatic tyre in accordance with an embodiment of the present invention;
FIG. 2 is an enlarged perspective view of a ply in accordance with the embodiment; and
FIG. 3 is an enlarged cross-sectional view of a cord of FIG. 2.

DETAILED DESCRIPTRION OF THE INVENTION

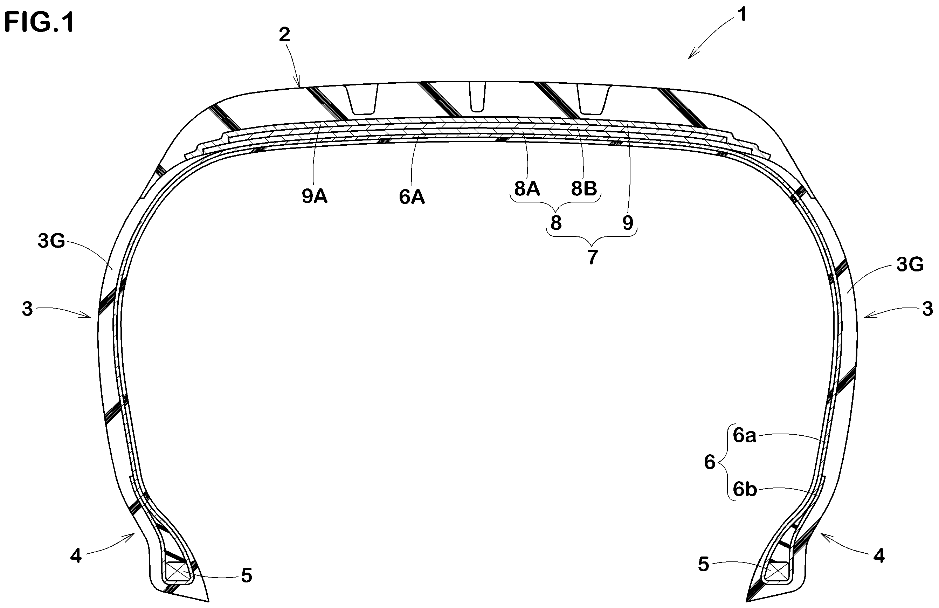

Hereinafter, one or more embodiments of the present invention will be described with reference to the drawings. FIG. 1 illustrates a meridian cross-sectional view of a pneumatic tyre (hereinafter, simply referred to as "tyre") 1 in accordance with an embodiment of the present invention. In FIG. 1, the tyre 1 is in a normal state. As illustrated in FIG. 1, the tyre 1 according to the present embodiment is a pneumatic tyre for passenger car. However, the present invention may be applied to heavy-duty tyres or motorcycle tyres.

As used herein, when the tyre is based on a standard, the "normal state" is such that the tyre 1 is mounted onto a standard wheel rim with a standard pressure but loaded with no tyre load. If a tyre is not based on the standards, the normal state is a standard state of use according to the purpose of use of the tyre and means a state of no tyre load. As used herein, unless otherwise noted, dimensions of portions of the tyre are values measured under the normal state.

As used herein, the "standard wheel rim" is a wheel rim officially approved for each tyre by standards organizations on which the tyre is based, wherein the standard wheel rim is the "standard rim" specified in JATMA, the "Design Rim" in TRA, and the "Measuring Rim" in ETRTO, for example.

As used herein, the "standard pressure" is a standard pressure officially approved for each tyre by standards organizations on which the tyre is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

As illustrated in FIG. 1, the tyre 1 according to the present embodiment includes a carcass 6. The carcass 6, for example, is composed of a single carcass ply 6A. The carcass ply 6A includes a plurality of carcass cords covered with a topping rubber. The carcass cords, for example, are oriented at an angle of from 75 to 90 degrees with respect to the tyre circumferential direction. For the carcass cords, organic fiber cords such as nylon, polyester or rayon may preferably be used, for example.

The carcass ply 6A includes a main portion 6a and a pair of turn-up portions 6b. The main portion 6a extends, through a pair of sidewall portions 3 and a tread portion 2, between axially spaced bead portions 4. The turn-up portions 6b are connected to the main portion 6a and turned up around bead cores 5 from axially inside to outside of the tyre to extend outwardly in the tyre radial direction.

In the present embodiment, the tread portion 2 includes a tread reinforcing layer 7. The tread reinforcing layer 7, for example, includes a belt layer 8. The belt layer 8, for example, includes two belt plies 8A and 8B. The belt plies 8A and 8B, for example, include a plurality of belt cords inclined at an angle with respect to the tyre circumferential direction and a topping rubber covering the belt cords. Preferably, the belt cords are oriented at an angle of from 10 to 45 degrees with respect to the tyre circumferential direction.

The tread reinforcing layer 7, for example, further includes a band layer 9. The band layer 9, for example, is composed of a single band ply 9A. The band ply 9A includes one or more band cords that are oriented at an angle equal to or less than 5 degrees with respect to the tyre circumferential direction. In some preferred embodiments, the band ply 9A is configured as a so-called jointless band ply in which a single band cord is spirally wound in the tyre circumferential direction.

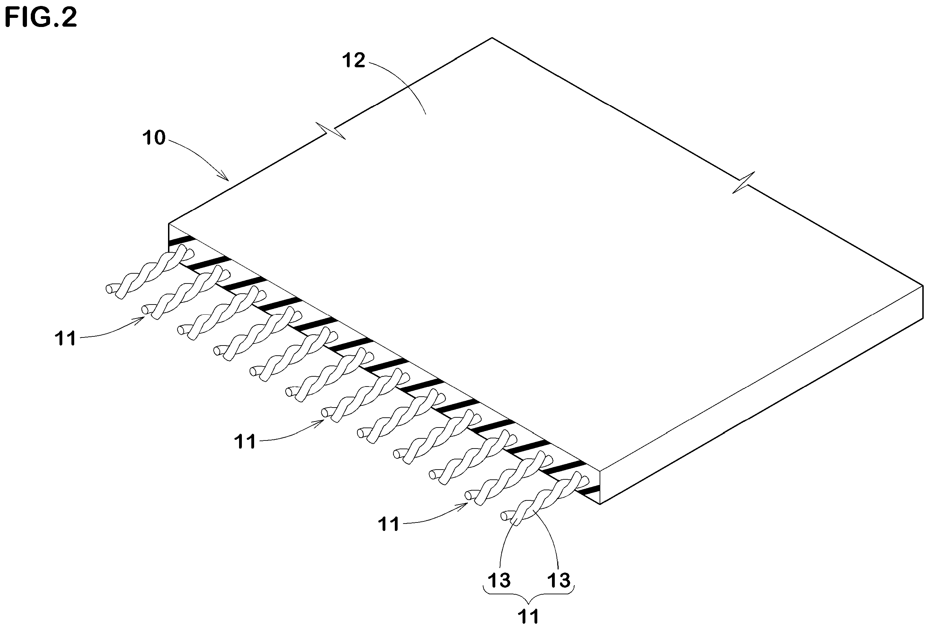

FIG. 2 illustrates an enlarged perspective view of a ply 10 included in the tyre in accordance with the present embodiment. As illustrated in FIG. 2, the tyre 1 according to the present embodiment includes the ply 10 which includes a plurality of cords 11 covered with a topping rubber 12. The ply 10 may apply to at least one of the carcass ply 6A, the belt plies 8A, 8B and the band ply 9A described above.

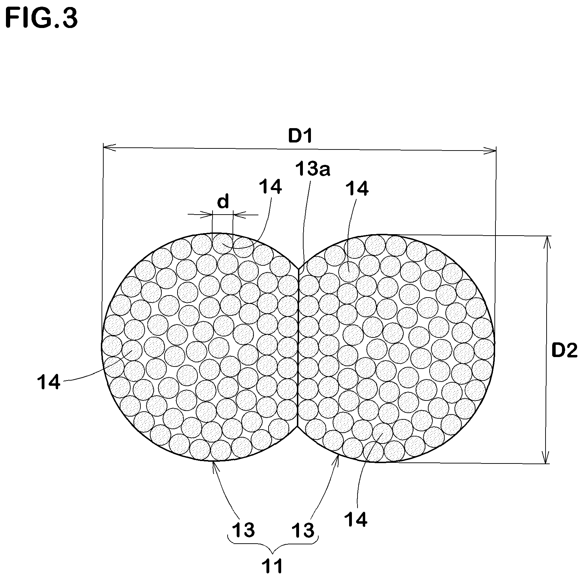

FIG. 3 illustrates an enlarged cross-sectional view of one of the cords 11. As illustrated in FIG. 3, each cord 11 includes a plurality of filaments 14 twisted together. The plurality of filaments each has an outer diameter d. In some preferred embodiments, each cord 11 according to the present embodiment includes a plurality of preliminary twisted yarns 13 in which a plurality of filaments was twisted together in advance. The preliminary twisted yarns 13 are twisted together. In the present embodiment, each cord 11 is composed of two preliminary twisted yarns 13. Further, in each cord 11 according to the present embodiment, since the two preliminary twisted yarns 13 are twisted together, portions 13a of outer surfaces of the preliminary twisted yarns 13 (corresponding to contact surfaces of the two preliminary twisted yarns 13) are flattened. As a result, the cross-sectional shape of each cord 11 is a substantially oval shape in which the cross-sectional width is small at the center thereof.

Each of the cords 11 has a ratio D/d of an average cord diameter D to the outer diameter d of each filament being equal to or more than 28. In such a cord 11, since the thin filaments 14 are tightly twisted together, even during high-speed running where a large tensile stress repeatedly acts on the cords 11, the deformation generated per filament 14 tends to be small and the stress that the cord 11 can exert can be increased. For this reason, the breakage of the filament 14 inside the cord 11 can be suppressed, and excellent steering stability can be maintained at high-speed running. Note that the cords 11 having the ratio D/d of 28 or more can be produced by appropriately combining known production methods.

The average code diameter D is calculated by the simple average of a major axis D1 and a minor axis D2 in the cross section of each cord 11. The major axis D1 means the maximum diameter of each cord 11. The minor axis D2 means the largest diameter of each cord 11 in the direction orthogonal to the major axis D1. Each cord 11 according to the present embodiment has a constant cross-sectional shape and extends in the length direction of the cord 11. Alternatively, the cross-sectional shape and cross-sectional area of the cord 11 may change in the length direction of the cord 11. In this case, it is preferable that the average cord diameter D be measured at the position where the cross-sectional area of the cord 11 is minimum. This is because the substantial tensile strength of a cord 11 depends on the configuration of the cord 11 at the position where the cross-sectional area of the cord 11 is minimum.

In general, in the ply 10 having the above-mentioned cords 11, one or more of the plurality of filaments 14 constituting the cord 11 are gradually broken due to repeated compression deformation when the tyre travels. As a result, the rigidity of the ply 10 may decrease. In particular, when driving at high speeds, the tyre is deformed frequently, so the steering stability tends to decrease due to the decrease in rigidity of the ply 10.

Although various studies have been conducted on cords of the plies, much attention has not been paid to the relationship between cords and a rubber member constituting the tyre. The inventors have focused on the relationship between the cords 11 of the ply 10 constituting the pneumatic tyre and a rubber member of the tyre, which had not received much attention in the past. Then, the inventors have made completed the present invention by analyzed these in detail.

As illustrated in FIG. 1, the tyre 1 includes a pair of sidewall rubbers 3G. The sidewall rubbers 3G, for example, are disposed outwardly in the tyre axial direction of the carcass 6 in the pair of sidewall portions 3 to form outer surfaces of the sidewall portions 3. In the present invention, the ratio D/d and a loss tangent $\tan\delta$ of at least one sidewall rubber 3G satisfy the following formula (1);

$$\{(\tan\delta) / (D/d)\} * 1000 \leq 5.5 \qquad (1).$$

Here, the loss tangent $\tan\delta$ of the at least one sidewall rubber 3G is a value measured using a dynamic viscoelasticity measuring device (Iplexer series) manufactured by GABO under the following conditions in accordance with the provisions of JIS-K6394. The test sample at the time of measurement is a rubber piece taken from the sidewall rubber 3G, having a length of 20 mm in the tyre circumferential direction, a width of 4 mm in the tyre radial direction, and a thickness of 1 mm.

Initial strain: 5%
Amplitude: +/-1%
Frequency: 10 Hz
Deformation mode: tensile deformation
Measurement temperature: 30 degrees C.

In the present invention, by satisfying the above formula (1), the heat generation of the sidewall rubber 3G can be reduced, and the decrease in rigidity of the sidewall rubber 3G can be suppressed. On the other hand, since the ratio D/d is sufficiently large for the heat generation of the sidewall rubber 3G, breakage of some filaments 14 (shown in FIG. 3 and the same applies hereinafter) in the ply 10 (shown in FIG. 2 and the same applies hereinafter) can be suppressed, and the decrease in rigidity of the ply 10 can effectively be suppressed. In addition, since the decrease in rigidity of the sidewall portions 3 and the ply 10 can be suppressed, cornering force can be generated with good response when a steering angle is applied to the tyre 1. Due to such an action, the tyre 1 according to the present invention can continuously exhibit excellent steering stability at high-speed running.

Hereinafter, a more detailed configuration of the present embodiment will be described. Note that each configuration described below shows a specific aspect of the present embodiment. Thus, the present invention can exert the above-mentioned effects even if the tyre does not include the configuration described below. Further, if any one of the configurations described below is applied independently to the tyre of the present invention having the above-mentioned characteristics, the performance improvement according to each additional configuration can be expected. Furthermore, when some of the configurations described below are applied in combination, it is expected that the performance of the additional configurations will be improved.

In the present invention, the ply 10 can be applied to the carcass ply 6A, the belt plies 8A and 8B, and/or the band ply 9A. In this embodiment, the ply 10 described above is applied to the carcass ply 6A and the band ply 9A. By setting the ply 10 which satisfies the above relationship as the carcass ply 6A, it is considered that the reaction force of the ply 10 can be increased while suppressing the decrease in rigidity of the side portions of the tyre. In addition, by setting the ply 10 which satisfy the above relationship as the band ply 9A, a large reaction force can be generated by the ply 10 in the tread portion, and the reaction force can be transmitted with good response in the side portions whose rigidity is maintained high. Hence, it is considered that the tyre according to the present embodiment can continuously exhibit excellent steering stability at high-speed running.

The present invention is not limited to the above-mentioned embodiment, and the above-mentioned ply 10 may be applied to belt plies 8A and 8B. Further, in another embodiment according to the present invention, the ply 10 described above may be applied to a reinforcing ply (not illustrated) for reinforcing the tread portion 2, the sidewall portions 3 and/or the bead portions 4. Such a reinforcing ply can help to further improve the steering stability at high-speed running.

In some more preferred embodiments, the ratio D/d and the tanδ of at least one of the sidewall rubbers satisfy the following formula (2);

$$\{(\tan\delta) / (D/d)\} * 1000 \leq 2.0 \qquad (2).$$

This can further enhance the above effects.

The loss tangent of the at least one sidewall rubber 3G is preferably equal to or more than 0.05, more preferably equal to or more than 0.07, but preferably equal to or less than 0.18, more preferably equal to or less than 0.16. Such a sidewall rubber 3G can be prepared by appropriately adjusting and combining known materials.

The above-mentioned sidewall rubber 3G can be obtained by appropriately combining known materials. For the rubber components of the sidewall rubber 3G, isoprene rubber, butadiene rubber (BR), styrene butadiene rubber (SBR), acrylonitrile butadiene rubber (NBR), chloroprene rubber (CR), butyl rubber (IIR), styrene-isoprene-butadiene copolymer rubber (SIBR) and the like can be employed. These may be used alone or in combination of two or more.

Further, fillers such as carbon black and silica, plasticizers such as oil and resin, processing aids such as fatty acids, vulcanization agents such as sulfur, vulcanization accelerators and the like can be appropriately added to the above-mentioned rubber components. The loss tangent tanδ of the sidewall rubber 3G according to the present embodiment can be adjusted by changing the glass transition point of the rubber component and the type and amount of the filler, the plasticizer, the vulcanizing agent, and the vulcanization accelerator as appropriate. In particular, by relatively reducing the amount of filler and plasticizer and relatively increasing the amount of vulcanizing agent and vulcanization accelerator as compared with the conventional rubber material, the loss tangent tanδ of the sidewall rubber 3G can be set in the above range.

As illustrated in FIG. 2, the cords 11 included in the ply 10 are organic fiber cords. The filaments 14 of the cords 11 according to the present embodiment include polyester fibers. The cords 11 like this can help to reduce the cost of manufacturing tyres. However, the material applied to the cords 11 is not limited to such an embodiment, and various materials such as nylon, rayon or aramid can be applied.

The number of cords 11 contained in a 5cm width of the ply 10, for example, is in a range of from 40 to 60, preferably 45 to 55. Also, the fineness of each cord 11 is preferably equal to or more than 2000 dtex, more preferably equal to or more than 2500 dtex, still further preferably equal to or more than 3000 dtex, but preferably equal to or less than 7000 dtex, more preferably equal to or less than 6500 dtex, still further preferably equal to or less than 6000 dtex. In the present embodiment, each cord 11 is composed of two preliminary twisted yarns 13. The fineness of each preliminary twisted yarn 13 is preferably equal to or more than 1000 dtex, more preferably equal to or more than 1500 dtex, but preferably equal to or less than 3500 dtex, more preferably equal to or less than 3000 dtex.

As illustrated in FIG. 3, to further improve the above effects, the ratio D/d of the cords 11 is preferably equal to or more than 33, more preferably equal to or more than 36. On the other hand, when the ratio D/d is excessively large, manufacturing cost of the cords 11 tends to increase. Thus, the ratio D/d is preferably equal to or less than 40, more preferably equal to or less than 38.

As illustrated in FIG. 3, the average cord diameter D of the cords 11, for example, is preferably in a range of from 0.50 to 0.90 mm, more preferably 0.58 to 0.78 mm. The outer diameter d of the filaments 14, for example, is preferably in a range of from 15.0 to 30.0 $\mu$m, more preferably 20.0 to 25.0 $\mu$m. However, the cords 11 and the filaments 14 are not limited to such dimensions.

Preferably, the cords 11 has a small heat shrinkage rate. The heat shrinkage rate of the cords 11 is preferably equal to or less than 5.0%, more preferably equal to or less than 4.0%, still further preferably equal to or less than 3.0%. Such a cord 11 does not shrink excessively even at high-speed running, and can further improve steering stability of the tyre.

As used herein, the "heat shrinkage rate" means the "dry heat shrinkage rate after heating" of the cord after heating at a temperature of 180 degrees C for five minutes under no load, which is measured in accordance with JIS-L1017, Section 8.10 (b) "Dry heat shrinkage rate after heating (method B)".

Preferably, the cords 11 has an intermediate elongation equal to or less than 6.5%, more preferably equal to or less than 5.0%, still further preferably equal to or less than 4.5%. Such a cord 11 can help to sustain excellent steering stability of the tyre. As used herein, the "intermediate elongation" means the elongation (%) when a constant load specified by the standard is applied in accordance with the chemical fiber tyre cord test method of JIS L1017.

The composition of the cords 11 above applies to the composition of the cords taken from new and unused tyre 1.

While the particularly preferable embodiments of the tyre in accordance with the present invention have been described in detail, the present invention is not limited to the illustrated embodiments, but can be modified within the scope of the invention as defined by the claims.

[Working example]

Pneumatic tyres of size 215/60R16 that satisfy the present invention were prepared based on the specifications in Tables 1-3. For comparison, pneumatic tyres of reference examples 1 to 4 were also prepared. The tyres of reference examples 1 to 4 had substantially the same configuration as the tyres of Examples except for the specifications shown in Tables 1 to 3. For each test tyre, steering stability at high speeds (when the tyre is new and when the tyre is used late) was tested. The common specifications and test methods for test tyres are as follows.

Rim size: 16x6.5J
Tire inner pressure: 210 kPa
Displacement of test vehicle: 2000 cc
Drive system: FF
Test tyre mounting position: All wheels

Steering stability at high speeds test (new and used tyres):

Steering stability when driving at high speeds in the above test vehicle was evaluated by the driver's sensuality. In Tables, "steering stability of new tyre" is an evaluation of the steering stability of a new test tyre that has been run-in. In Tables, "Steering stability of used tyre" is an evaluation of the steering stability of the test tyre after traveling 3000 km on a general road. The test results are indicated in Tables using a score with the steering stability of Ref. 1 as 100. The larger the value, the better the steering stability at high speeds.

Tables 1 to 3 show the test results.

[Table 1]

|  | Ref. 1 | Ref. 2 | Ref. 3 | Ref. 4 | Ex. 1 | Ex. 2 | Ex. 3 | Ex. 4 | Ex. 5 |
|---|---|---|---|---|---|---|---|---|---|
| Ratio D/d of average cord diameter D to outer diameter d of filaments | 22 | 24 | 26 | 28 | 30 | 33 | 36 | 38 | 40 |
| Sidewall rubber compound | A | A | A | A | A | A | A | A | A |
| Loss tangent tanδ of sidewall rubbers | 0.16 | 0.16 | 0.16 | 0.16 | 0.16 | 0.16 | 0.16 | 0.16 | 0.16 |
| {(tanδ) / (D/d)} x 1000 | 7.3 | 6.7 | 6.2 | 5.7 | 5.3 | 4.8 | 4.4 | 4.2 | 4.0 |
| Intermediate elongation of cords (%) | 4.3 | 4.3 | 4.3 | 4.3 | 4.3 | 4.3 | 4.3 | 4.3 | 4.3 |
| Heat shrink rate of cords (%) | 4.0 | 4.0 | 4.0 | 4.0 | 4.0 | 4.0 | 4.0 | 4.0 | 4.0 |
| Steering stability of new tyre (score) | 100 | 100 | 101 | 102 | 105 | 106 | 108 | 109 | 109 |
| Steering stability of used tyre (score) | 100 | 101 | 102 | 103 | 110 | 112 | 115 | 116 | 117 |

[Table 2]

|  | Ex. 6 | Ex. 7 | Ex. 8 | Ex. 9 | Ex. 10 | Ex. 11 | Ex. 12 | Ex. 13 | Ex. 14 | Ex. 15 |
|---|---|---|---|---|---|---|---|---|---|---|
| Ratio D/d of average cord diameter D to outer diameter d of filaments | 30 | 33 | 36 | 38 | 40 | 30 | 33 | 36 | 38 | 40 |
| Sidewall rubber compound | B | B | B | B | B | C | C | C | C | C |
| Loss tangent tanδ of sidewall rubbers | 0.12 | 0.12 | 0.12 | 0.12 | 0.12 | 0.05 | 0.05 | 0.05 | 0.05 | 0.05 |
| {(tanδ) / (D/d)} x 1000 | 4.0 | 3.6 | 3.3 | 3.2 | 3.0 | 1.7 | 1.5 | 1.4 | 1.3 | 1.3 |
| Intermediate elongation of cords (%) | 4.3 | 4.3 | 4.3 | 4.3 | 4.3 | 4.3 | 4.3 | 4.3 | 4.3 | 4.3 |
| Heat shrink rate of cords (%) | 4.0 | 4.0 | 4.0 | 4.0 | 4.0 | 4.0 | 4.0 | 4.0 | 4.0 | 4.0 |
| Steering stability of new tyre (score) | 105 | 106 | 109 | 110 | 110 | 106 | 107 | 108 | 109 | 110 |
| Steering stability of used tyre (score) | 111 | 113 | 116 | 117 | 118 | 112 | 113 | 116 | 117 | 118 |

[Table 3]

|  | Ex. 16 | Ex. 17 | Ex. 18 | Ex. 19 | Ex. 20 | Ex. 21 | Ex. 22 | Ex. 23 |
|---|---|---|---|---|---|---|---|---|
| Ratio D/d of average cord diameter D to outer diameter d of filaments | 30 | 30 | 30 | 30 | 30 | 30 | 30 | 30 |
| Sidewall rubber compound | A | A | A | A | A | A | A | A |
| Loss tangent tanδ of sidewall rubbers | 0.16 | 0.16 | 0.16 | 0.16 | 0.16 | 0.16 | 0.16 | 0.16 |
| {(tanδ) / (D/d)} x 1000 | 5.3 | 5.3 | 5.3 | 5.3 | 5.3 | 5.3 | 5.3 | 5.3 |

(continued)

|  | Ex. 16 | Ex. 17 | Ex. 18 | Ex. 19 | Ex. 20 | Ex. 21 | Ex. 22 | Ex. 23 |
|---|---|---|---|---|---|---|---|---|
| Intermediate elongation of cords (%) | 6.3 | 5.3 | 3.3 | 2.3 | 5.3 | 4.3 | 3.3 | 2.3 |
| Heat shrink rate of cords (%) | 2.0 | 3.0 | 5.0 | 6.0 | 2.0 | 3.0 | 4.0 | 5.0 |
| Steering stability of new tyre (score) | 107 | 105 | 104 | 103 | 110 | 108 | 107 | 106 |
| Steering stability of used tyre (score) | 112 | 110 | 109 | 108 | 115 | 114 | 112 | 111 |

The sidewall rubber compounds A to C shown in Tables 1 to 3 are as shown in Table 4 below.

[Table 4]

|  | | (Unit: mass part) | |
|---|---|---|---|
|  | A | B | C |
| NR | 50 | 50 | 50 |
| BR150B | 50 | 50 | 50 |
| N550 | 55 | 38 | - |
| N660 | - | - | 35 |
| Oil | 15 | 7 | 4 |
| Anti-aging agent 6C | 4.5 | 4.5 | 4.5 |
| Anti-aging agent RD | 2.5 | 2.5 | 2.5 |
| Wax | 1.5 | 1.5 | 1.5 |
| Stearic acid | 1.5 | 1.5 | 1.5 |
| Zinc oxide | 4 | 4 | 4 |
| 5% oil sulfur | 1.5 | 1.5 | 1.5 |
| Vulcanization accelerator CZ | 1 | 1 | 1.2 |
| Loss tangent at 30 degrees C | 0.16 | 0.12 | 0.05 |

Note that the total score of steering stability when the tyre is new and when the tyre is used late may be used as an index for comprehensive evaluation of steering stability during high-speed running.

As shown in Tables 1 to 3, it was confirmed that the tyres of the examples continuously exhibited excellent steering stability at high speeds.

## Claims

1.   A pneumatic tyre (1) comprising:

a ply (10) having a plurality of cords (11) each having an average cord diameter D; and
a sidewall rubber (3G) having a loss tangent $\tan\delta$, as measured in accordance with the provisions of JIS-K-6394 and under the conditions specified in the description,
wherein
the plurality of cords (11) each comprises a plurality of filaments (14) twisted together, the plurality of filaments (14) each having an outer diameter d,
**characterized in that**
the plurality of cords (11) each has a ratio D/d of the average cord diameter D to the outer diameter d being equal to or more than 28, and
the ratio D/d and the loss tangent $\tan\delta$ of the sidewall rubber (3G) satisfy the following formula (1);

$$\{(\tan\delta) \, / \, (D/d)\} * 1000 \leq 5.5 \qquad (1).$$

2. The pneumatic tyre (1) according to claim 1, wherein
the ratio D/d is equal to or more than 32.

3. The pneumatic tyre (1) according to claim 1, wherein
the ratio D/d is equal to or more than 35.

4. The pneumatic tyre (1) according to any one of claims 1 to 3, wherein
the ratio D/d and the tan$\delta$ of the sidewall rubber (3G) satisfy the following formula (2);

$$\{(\tan\delta) \, / \, (D/d)\} * 1000 \leq 2.0 \quad (2).$$

5. The pneumatic tyre (1) according to any one of claims 1 to 4, wherein
the plurality of filaments (14) of the plurality of cords (11) comprises polyester fibers.

6. The pneumatic tyre (1) according to any one of claims 1 to 5, wherein
the plurality of cords (11) has a heat shrinkage rate equal to or less than 3.0% after heating at a temperature of 180 degrees C for five minutes under no load, as measured in accordance with JIS-L1017, Section 8.10 (b) "Dry heat shrinkage rate after heating (method B)".

7. The pneumatic tyre (1) according to any one of claims 1 to 6, wherein
the plurality of cords (11) has an intermediate elongation equal to or less than 6.5% when a constant load specified by the standard is applied in accordance with the chemical fiber tyre cord test method of JIS L1017.

8. The pneumatic tyre (1) according to any one of claims 1 to 7, wherein
the ply (10) comprises a carcass ply (6A).

9. The pneumatic tyre (1) according to any one of claims 1 to 8, wherein
the ply (10) comprises a reinforcing ply that reinforces a tread portion (2), a sidewall portion (3), and/or a bead portion (4).

10. The pneumatic tyre (1) according to any one of claims 1 to 9, wherein
the plurality of cords (11) each comprises a plurality of preliminary twisted yarns (13) twisted together, and the plurality of preliminary twisted yarns (13) comprises some of the plurality of filaments (14).

11. The pneumatic tyre (1) according to claim 10, wherein
each of the plurality of cords (11) consists of two preliminary twisted yarns (13).

**Patentansprüche**

1. Luftreifen (1) mit:

einer Lage (10), die eine Vielzahl von Korden (11) hat, von denen jeder einen durchschnittlichen Korddurchmesser D hat; und
einem Seitenwandgummi (3G), der einen Verlusttangens tan$\delta$ hat, der gemäß den Bestimmungen von JIS-K-6394 und unter den in der Beschreibung angegebenen Bedingungen gemessen wird,
wobei
die Vielzahl von Korden (11) jeweils eine Vielzahl von miteinander verdrehten Filamenten (14) umfasst, wobei die Vielzahl von Filamenten (14) jeweils einen Außendurchmesser d hat,
**dadurch gekennzeichnet, dass**
die Vielzahl von Korden (11) jeweils ein Verhältnis D/d des durchschnittlichen Korddurchmessers D zum Außendurchmesser d hat, das größer oder gleich 28 ist, und
das Verhältnis D/d und der Verlusttangens tan$\delta$ des Seitenwandgummis (3G) die folgende Formel (1) erfüllen;

$$\{(\tan\delta) / (D/d)\} * 1000 \leq 5,5 \quad (1).$$

**2.** Luftreifen (1) nach Anspruch 1, wobei
das Verhältnis D/d größer oder gleich 32 ist.

**3.** Luftreifen (1) nach Anspruch 1, wobei
das Verhältnis D/d größer oder gleich 35 ist.

**4.** Luftreifen (1) nach einem der Ansprüche 1 bis 3, wobei
das Verhältnis D/d und der tanδ des Seitenwandgummis (3G) die folgende Formel (2) erfüllen;

$$\{(\tan\delta) / (D/d)\} * 1000 \leq 2,0 \quad (2).$$

**5.** Luftreifen (1) nach einem der Ansprüche 1 bis 4, wobei
die Vielzahl von Filamenten (14) der Vielzahl von Korden (11) Polyesterfasern umfasst.

**6.** Luftreifen (1) nach einem der Ansprüche 1 bis 5, wobei
die Vielzahl von Korden (11) eine Wärmeschrumpfungsrate von kleiner oder gleich 3,0% nach fünfminütigem Erhitzen bei einer Temperatur von 180 Grad C unter keiner Last hat, die gemäß JIS-L1017, Abschnitt 8.10 (b) "Trockenwärmeschrumpfungsrate nach Erhitzen (Verfahren B)" gemessen wird.

**7.** Luftreifen (1) nach einem der Ansprüche 1 bis 6, wobei
die Vielzahl von Korden (11) eine mittlere Dehnung von kleiner oder gleich 6,5% hat, wenn gemäß dem Chemiefaserreifenkorden-Prüfverfahren von JIS L1017 eine durch den Standard spezifizierte konstante Last aufgebracht wird.

**8.** Luftreifen (1) nach einem der Ansprüche 1 bis 7, wobei
die Lage (10) eine Karkassenlage (6A) umfasst.

**9.** Luftreifen (1) nach einem der Ansprüche 1 bis 8, wobei
die Lage (10) eine Verstärkungslage umfasst, die einen Laufflächenabschnitt (2), einen Seitenwandabschnitt (3) und/oder einen Wulstabschnitt (4) verstärkt.

**10.** Luftreifen (1) nach einem der Ansprüche 1 bis 9, wobei
die Vielzahl von Korden (11) jeweils eine Vielzahl von miteinander verdrehten vorgezwirnten Garnen (13) umfasst und die Vielzahl von vorgezwirnten Garnen (13) einige der Vielzahl von Filamenten (14) umfasst.

**11.** Luftreifen (1) nach Anspruch 10, wobei
jede der Vielzahl von Korden (11) aus zwei vorgezwirnten Garnen (13) besteht.

**Revendications**

**1.** Pneumatique (1) comprenant :

un pli (10) comportant une pluralité de câbles (11) ayant chacun un diamètre moyen de câble D ; et
un caoutchouc de flanc (3G) ayant une tangente de perte tanδ, mesurée conformément aux dispositions de la norme JIS-K-6394 et dans les conditions spécifiées dans la description,
dans lequel
chacun de la pluralité de câbles (11) comprend une pluralité de filaments (14) torsadés ensemble, la pluralité de filaments (14) ayant chacun un diamètre extérieur d,
**caractérisé en ce que**
chacun de la pluralité de câbles (11) a un rapport D/d entre le diamètre moyen D du câble et le diamètre extérieur d égal ou supérieur à 28, et
le rapport D/d et la tangente de perte tanδ du caoutchouc de flanc (3G) satisfont à la formule (1) suivante :

$$\{(\tan\delta) / (D/d)\} * 1000 \leq 5{,}5 \quad (1).$$

2. Pneumatique (1) selon la revendication 1, dans lequel le rapport D/d est égal ou supérieur à 32.

3. Pneumatique (1) selon la revendication 1, dans lequel le rapport D/d est égal ou supérieur à 35.

4. Pneumatique (1) selon l'une quelconque des revendications 1 à 3, dans lequel le rapport D/d et le tanδ du caoutchouc de flanc (3G) satisfont à la formule (2) suivante :

$$\{(\tan\delta) / (D/d)\} * 1000 \leq 2{,}0 \quad (2).$$

5. Pneumatique (1) selon l'une quelconque des revendications 1 à 4, dans lequel la pluralité de filaments (14) de la pluralité de câbles (11) comprennent des fibres de polyester.

6. Pneumatique (1) selon l'une quelconque des revendications 1 à 5, dans lequel la pluralité de câbles (11) ont un taux de retrait à chaud égal ou inférieur à 3,0 % après chauffage à une température de 180 °C pendant cinq minutes sans charge, mesuré conformément à la norme JIS-L1017, section 8.10 (b) « Taux de retrait à la chaleur sèche après chauffage (méthode B) ».

7. Pneumatique (1) selon l'une quelconque des revendications 1 à 6, dans lequel la pluralité de câbles (11) ont un allongement intermédiaire égal ou inférieur à 6,5 % lorsqu'une charge constante spécifiée par la norme est appliquée conformément à la méthode d'essai des câbles de pneumatiques en fibres chimiques de la norme JIS L1017.

8. Pneumatique (1) selon l'une quelconque des revendications 1 à 7, dans lequel le pli (10) comprend un pli de carcasse (6A).

9. Pneumatique (1) selon l'une quelconque des revendications 1 à 8, dans lequel le pli (10) comprend un pli de renfort qui renforce une partie de bande de roulement (2), une partie de flanc (3) et/ou une partie de talon (4).

10. Pneumatique (1) selon l'une quelconque des revendications 1 à 9, dans lequel chacun de la pluralité de câbles (11) comprend une pluralité de fils préliminaires torsadés (13) torsadés ensemble, et la pluralité de fils préliminaires torsadés (13) comprennent certains de la pluralité de filaments (14).

11. Pneumatique (1) selon la revendication 10, dans lequel chacun de la pluralité de câbles (11) est constitué de deux fils préliminaires torsadés (13).

FIG.1

FIG.2

FIG.3

**EP 4 074 521 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008010531 A1
- US 10807415 B2
- ES 2363533 T3
- JP 2017140877 A